# EUROPÄISCHE PATENTSCHRIFT

(11) **EP 2 240 718 B1**
(45) Veröffentlichungstag und Bekanntmachung des Hinweises auf die Patenterteilung: **03.10.2012**
(21) Anmeldenummer: 09710625.6
(22) Anmeldetag: 10.02.2009
(51) Int. Cl.: F16L 37/56, F16L 39/00

(54) **MEHRFACH-STECKKUPPLUNG FÜR MEDIENLEITUNGEN**
MULTIPLE PLUG COUPLING FOR MEDIA LINES
ACCOUPLEMENT A EMBOITEMENT MULTIPLE POUR CONDUITS DE FLUIDE

(30) Priorität: 15.02.2008 DE 202008002206 U
(43) Veröffentlichungstag der Anmeldung: 20.10.2010
(73) Patentinhaber: Voss Automotive GmbH, 51688 Wipperfürth (DE)
(72) Erfinder: HAGEN, Harald, 51688 Wipperfürth (DE); HASBERG, Markus, 51688 Wipperfürth (DE); SUHR, Andreas, 51789 Lindlar (DE)
(74) Vertreter: Patentanwälte Dr. Solf & Zapf
(86) Internationale Anmeldenummer: PCT/EP2009/051498
(87) Internationale Veröffentlichungsnummer: WO 2009/101076

(56) Entgegenhaltungen:
- EP-A- 1 321 698
- EP-A- 1 798 460
- WO-A-2006/077264
- DE-A1- 4 033 050

## Beschreibung

Die vorliegende Erfindung betrifft eine Mehrfachkupplung gemäß dem Oberbegriff des Anspruchs 1.

Solche Mehrfachkupplungen (siehe dazu beispielsweise die Veröffentlichungen DE 74 21 926 U, DE 20 2005 020 263 U1, WO 2006/077264 A1 und EP 0 618 393 A1) haben den Vorteil, dass mehrere Medienleitungen (Fluidkanäle) gleichzeitig bzw. gemeinsam verbunden oder getrennt werden können. Dazu sind die plattenförmigen Kupplungsteile mit Steckverbinderteilen und zwar Stecker- und Muffenteilen, ausgestattet, so dass durch Zusammenführen der Kupplungsteile in einer zu den Plattenebenen senkrechten Fügerichtung die Steckverbinderteile zusammensteckbar bzw. in umgekehrter Richtung lösbar sind.

Die Veröffentlichung DE 40 33 050 A1 beschreibt ebenfalls eine solche Mehrfachkupplung der dem Oberbegriff des Anspruchs 1 entsprechenden Art. Diese bekannte Mehrfachkupplung weist allerdings eine insofern besondere Ausgestaltung auf, als diese zusätzliche Sperrventile in den Leitungskanälen aufweist; es handelt sich um eine "auslaufsichere Sperrventileinrichtung". Im Übrigen haben die Leitungskanäle einen abgewinkelten Verlauf. Sie bestehen jeweils aus einem in Fügerichtung der Steckverbinderteile verlaufenden Abschnitt, der über einen quer verlaufenden Abschnitt in einen Leitungsverbinder übergeht.

Der Erfindung liegt die Aufgabe zu Grunde, eine Mehrfachkupplung der genannten Art hinsichtlich ihrer Einsatzmöglichkeiten zu verbessern bzw. zu erweitern.

Erfindungsgemäß wird dies durch die Merkmale des Patentanspruchs erreicht. Vorteilkafte Ausgestaltungen sind in den abhängigen Ansprüchen enthalten.

Demnach ist eines von drei Kupplungsteilen zusätzlich als Querverbinder mit mindestens einem quer zur Fügerichtung verlaufenden Querkanal und mindestens einem im Außenrandbereich des Kupplungsteils angeordneten Zusatz-Verbinderteil ausgebildet. Durch diese vorteilhafte Ausgestaltung erhält die erfindungsgemäße Mehrfachkupplung eine zusätzliche Verteilungsfunktion, indem das als Querverbinder ausgestaltete Kupplungsteil mit mindestens einer zusätzlichen Quer-Abzweigung ausgebildet ist. Dabei kann der mindestens eine Querkanal mit mindestens einem der vorhandenen Leitungskanäle verbunden sein. Zusätzlich oder alternativ kann ein Querkanal auch unabhängig von den übrigen Leitungskanälen durch den Querverbinder verlaufen. Hierbei verbindet der Querkanal dann mindestens zwei Zusatz-Verbinderteile miteinander, die insbesondere in gegenüberliegenden Außenrandbereichen des Kupplungsteils angeordnet sind. Das/jedes Zusatz-Verbinderteil ist bevorzugt als Steckverbinderteil (Stecker oder Muffe) ausgebildet, wodurch Querverbindungen besonders einfach durch Zusammenstecken hergestellt oder durch Auseinanderziehen getrennt werden können.

Durch die erfindungsgemäße Ausgestaltung kann eine Art Baukastensystem realisiert werden, wobei mehrere (d. h. mindestens zwei) Mehrfachkupplungen unmittelbar oder mittelbar über die Querverbinder verbunden werden können. Hierdurch erübrigen sich vorteilhafterweise für solche Verbindungen zusätzliche Leitungen und Verzweigungsstücke.

Weitere vorteilhafte Ausgestaltungsmerkmale der Erfindung sind in den abhängigen Ansprüche und der folgenden Beschreibung enthalten.

Anhand der Zeichnungen soll die Erfindung beispielhaft genauer erläutert werden. Dabei zeigen:
- Fig. 1: eine Perspektivansicht einer bevorzugten Ausführungsform einer erfindungsgemäßen Mehrfachkupplung im gekuppelten Zustand,
- Fig. 2: eine Draufsicht der Mehrfachkupplung in Pfeilrichtung II gemäß Fig. 1,
- Fig. 3: einen Querschnitt in der Ebene III-III in Fig. 2,
- Fig. 4: einen stark vergrößerten Schnitt längs der Schnittlinie IV-IV in Fig. 2,
- Fig. 5: in einer Draufsicht ähnlich Fig. 2 eine beispielhafte Anordnung mit mehreren erfindungsgemäßen Mehrfachkupplungen,
- Fig. 6: eine weitere, stark schematische Draufsicht einer Anordnung mit zwei erfindungsgemäßen Querverbindem,
- Fig. 7: einen Schnitt in der Ebene VII-VII gemäß Fig. 6,
- Fig. 8: eine Darstellung analog zu Fig. 7, jedoch mit einem zusätzlichen Querverbinderteil,
- Fig. 9: eine Perspektivansicht mit zwei querverbundenen Mehrfachkupplungen,
- Fig. 10: eine Seitenansicht (verkleinert) in Pfeilrichtung X gemäß Fig. 9,
- Fig. 11: eine verkleinerte Prinzipansicht zu Fig. 9,
- Fig. 12: einen vergrößerten Querschnitt in der Ebene XII-XII in Fig. 10,
- Fig.13: eine Perspektivansicht von zwei mittelbar über eine dritte Kopplung querverbundenen Mehrfachkupplungen,
- Fig.14: eine Seitenansicht (Pfeilrichtung XIV in Fig. 13),
- Fig.15: eine schematische Vorderansicht zu Fig. 13 und
- Fig.16: einen vergrößerten Querschnitt in der Ebene XVI-XVI in Fig.14.

In den verschiedenen Figuren der Zeichnung sind gleiche Teile stets mit den gleichen Bezugszeichen versehen.

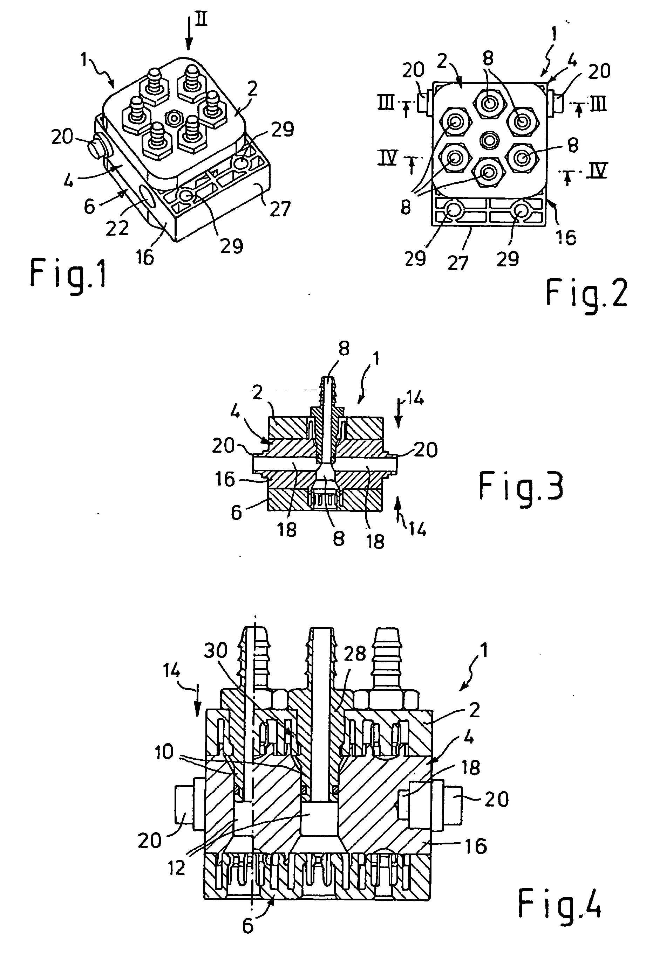

Eine erfindungsgemäße Mehrfachkupplung 1 dient zum gleichzeitigen Verbinden oder Trennen von mehreren Medienleitungen bzw. Fluidkanälen in beliebigen Strömungs- und/oder Druckmittelsystemen. Dazu weist die Mehrfachkupplung 1 zwei plattenartige Kupplungsteile 2 und 4 auf. Weiterhin ist gemäß Fig. 1 bis 4 und Fig. 9 bis 16 noch ein drittes plattenförmiges Kupplungsteil 6 vorgesehen. Diese Kupplungsteile weisen jeweils mehrere Leitungskanäle 8 mit einer entsprechenden Anzahl von Ftuid-Steckverbinderteilen, und zwar einerseits Steckerteilen 10 und andererseits Muffenöffnungen 12, derart auf, dass diese Fluid-Steckverbinderteile 10, 12 durch Zusammenführen der jeweiligen Kupplungsteile 2 und 4 bzw. 4 und 6 paarweise in einer zu den Plattenebenen senkrechten Fügerichtung 14 zusammensteckbar bzw. umgekehrt voneinander lösbar sind.

Erfindungsgemäß ist eines der Kupplungsteile, und zwar wie dargestellt das Kupplungsteil 4, zusätzlich als Querverbinder 16 mit mindestens einem quer zur Fügerichtung 14 verlaufenden Querkanal 18 und mindestens einem diesem zugeordneten, im Außenrandbereich des Kupplungsteils 4 angeordneten Zusatz-Verbinderteil ausgebildet, wobei das Zusatz-Verbinderteil seinerseits vorzugsweise als Steckverbinderteil, und zwar als Stecker 20 oder Muffe 22, ausgebildet ist.

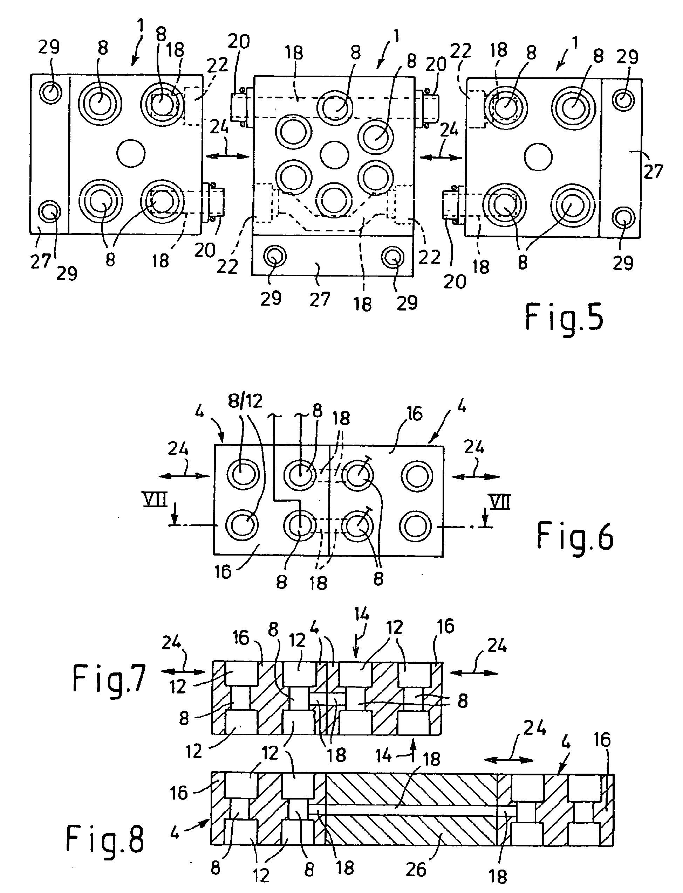

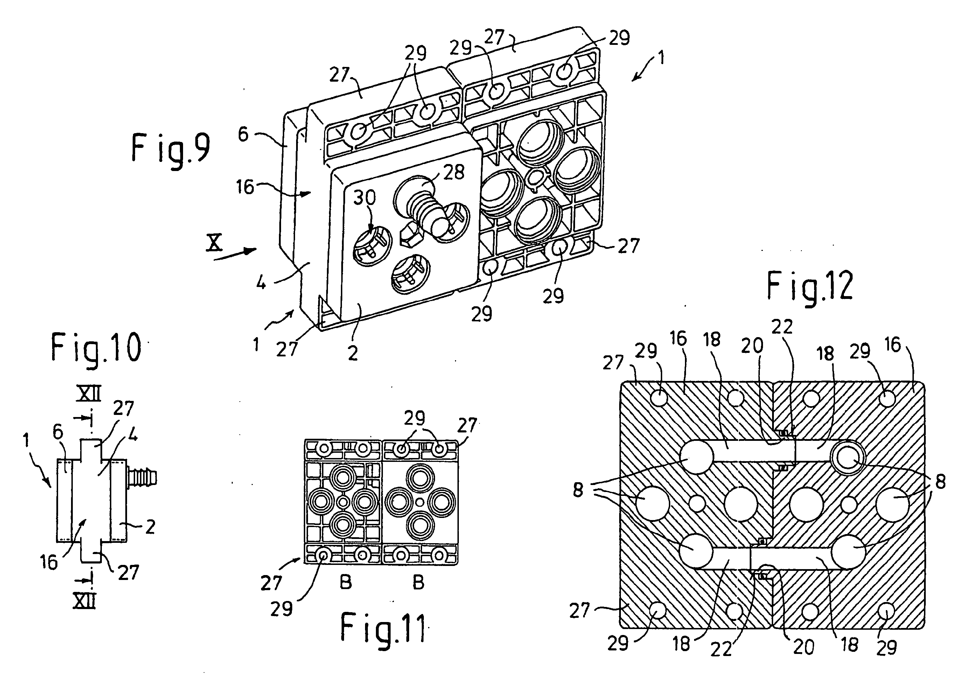

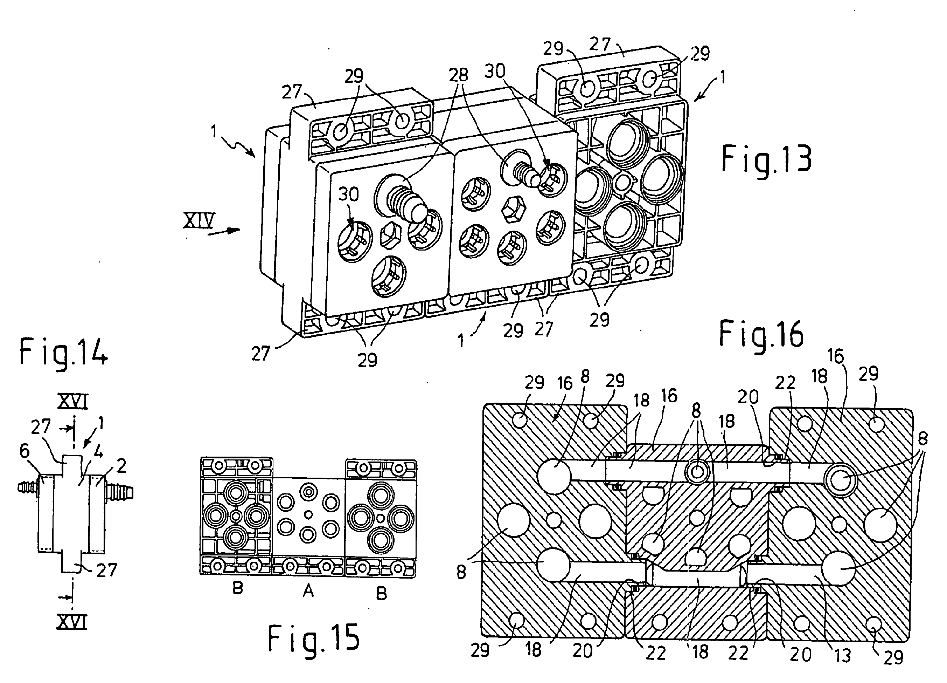

Der Querkanal 18 kann mit mindestens einem der Leitungskanäle 8 in Fluidverbindung stehen. Hierzu wird auf Fig. 3, Fig. 5, oberer Bereich sowie auch auf Fig. 7, 8, 12 und 16 verwiesen. Der oder ein weiterer Querkanal 18 kann auch unabhängig von den Leitungskanälen 8 durch das den Querverbinder 16 bildende Kupplungsteil 4 verlaufen (s. jeweils den mittleren, unteren Bereich in Fig. 5 und 16). Dabei ist jedem Querkanal 18 mindestens ein Zusatz-Steckverbinderteil 20 oder 22 zugeordnet (Fig. 12,16). Es ist auch möglich, dass der Querkanal 18 mindestens zwei Zusatz-Steckverbinderteile 20 bzw. 22 miteinander verbindet, die dann insbesondere in gegenüberliegenden Außenrandbereichen des Kupplungsteils 4 bzw. des Querverbinders 16 angeordnet sind (Fig. 1 bis 5 und 16).

In weiterer bevorzugter Ausgestaltung weist das den Querverbinder 16 bildende Kupplungsteil 4 eine geradzahlige Anzahl von Zusatz-Steckverbinderteilen 20 und 22 auf, die derart angeordnet sowie jeweils zur Hälfte als Stecker 20 und zur Hälfte als Muffen 22 ausgebildet sind, dass der Querverbinder 16 mit mindestens einem weiteren ähnlichen oder gleichartigen Querverbinder 16 in einer zu der Fügerichtung 14 senkrechten Querfügerichtung 24 kuppelbar ist. Damit kann eine Art Baukastensystem realisiert werden, wobei die Bestandteile teilweise als "Gleichteile" ausgebildet sein können.

Beispielsweise können gemäß Fig. 6, 7 sowie 9 bis 12 zwei als Querverbinder 16 ausgebildete Kupplungsteile 4 zweier Kupplungen B (Fig. 11) unmittelbar miteinander in Querfügerichtung 24 gekuppelt werden. Gemäß Fig. 8 können auch zwei Querverbinder 16 mittelbar über einen speziellen Zusatzquerverbinder 26 oder gemäß Fig. 5, 13 bis 16 über einen Querverbinder 16 kuppelbar sein. Gemäß Fig. 15 können so zwei Kupplungen B über eine Kupplung A querverbunden werden. Der Zusatzquerverbinder 26 muss nicht Teil einer Mehrfachkupplung sein.

In weiterer bevorzugter Ausgestaltung weist das bzw. jedes als Querverbinder 16 ausgebildete Kupplungsteil 4 alsFluid-Steckverbinderteile ausschließlich Muffenöffnungen 12 zum Einstecken von Steckerteilen 10 des jeweils anderen Kupplungsteils 2, 6 auf. Ferner kann der/jeder Querverbinder 16 mindestens einen randlich vorstehenden Montageabschnitt 27 mit Befestigungslöchem 29 aufweisen. Weiterhin ist es vorteilhaft, wenn die Steckerteile 10 der Kupplungsteile 2 und 6 als gesonderte Einsatzteile 28 ausgebildet sind, die gemäß Fig. 3 und 4 in Aufnahmeöffnungen des jeweiligen Kupplungsteils 2, 6 insbesondere über Rastmittel 30 fixiert gehalten sind. Einzelheiten zu dieser bevorzugten Ausgestaltung sind auch in den Veröffentlichungen EP 0 618 393 A1 und WO 2006/077264 A1 beschrieben.

Zumindest der/jeder Querverbinder 16 ist bevorzugt als einstückiges Formteil insbesondere aus Kunststoff gebildet (s. insbesondere Fig. 9 und 13).

Die Erfindung ist nicht auf die dargestellten und beschriebenen Ausführungsbeispiele beschränkt, sondern umfasst auch alle im Sinne der Erfindung gleichwirkenden Ausführungen. So müssen die Zusatz-Verbinderteile für die Querverbindungen nicht unbedingt als Steckverbinder ausgebildet sein. Beispielsweise kann es sich zumindest teilweise auch um Verschraubungen (Innen- und/oder Außengewindeabschnitte) handeln, insbesondere zum Anschluss von Leitungen. Die bevorzugten Steckverbinder der Querverbinder 16 können allesamt als Muffen 22 (oder Stecker 20) ausgebildet sein, die dann paarweise über gesonderte Doppelstecker (Doppelmuffen) verbunden werden können.

## Patentansprüche

1. Mehrfachkupplung (1) zum gleichzeitigen Verbinden oder Trennen von mehreren Medienleitungen, mit zwei plattenartigen Kupplungsteilen (2, 4), die jeweils mehrere Leitungskanäle (8) mit einer entsprechenden Anzahl von Fluid-Steckverbinderteilen (10,12) derart aufweisen, dass die Steckverbinderteile (10,12) durch Zusammenführen der Kupplungsteile (2, 4) paarweise in einer Fügerichtung (14) zusammensteckbar sind,
**dadurch gekennzeichnet, dass** das eine, erste Kupplungsteil (4) auf seiner dem anderen, zweiten Kupplungsteil (2) gegenüberliegenden Seite in entsprechender Weise über Steckverbinderteile (10,12) mit einem weiteren, dritten Kupplungsteil (6) kuppelbar ist, wobei das erste Kupplungsteil (4) zusätzlich als Querverbinder (16) mit mindestens einem zusätzlich zu den Leitungskanälen (8) quer zur Fügerichtung (14) verlaufenden Querkanal (18) und mindestens einem im Außenrandbereich des Kupplungsteils (4) angeordneten Zusatz-Verbinderteil (20, 22) ausgebildet ist.

2. Mehrfachkupplung nach Anspruch 1,
**dadurch gekennzeichnet, dass** derQuerkanal(18)mit mindestens einem der Leitungskanäle (8) verbunden ist.

3. Mehrfachkupplung nach Anspruch 1 oder 2,
**dadurch gekennzeichnet, dass** der Querkanal (18) unabhängig von den Leitungskanälen (8) durch das den Querverbinder (16) bildende Kupplungsteil (4) verläuft.

4. Mehrfachkupplung nach einem der Ansprüche 1 bis 3,
**dadurch gekennzeichnet, dass** der Querkanal (18) mindestens zwei Zusatz-Verbinderteile (20, 22) miteinander verbindet, die insbesondere in gegenüberliegenden Außenrandbereichen des Kupplungsteils (4) angeordnet sind.

5. Mehrfachkupplung nach einem der Ansprüche 1 bis 4,
**dadurch gekennzeichnet, dass** dasdenQuerverbinder(16) bildende Kupplungsteil (4) eine geradzahlige Anzahl von Zusatz-Verbinderteilen (20, 22) aufweist, die derart angeordnet sowie jeweils zur Hälfte als Stecker (20) und zur Hälfte als Muffen (22) ausgebildet sind, dass der Querverbinder (16) mit mindestens einem weiteren ähnlichen oder gleichartigen Querverbinder (16) in einer zu der Fügerichtung (14) senkrechten Querfügerichtung (24) durch Zusammenstecken kuppelbar ist.

6. Mehrfachkupplung nach einem der Ansprüche 1 bis 5,
**dadurch gekennzeichnet, dass** zwei als Querverbinder (16) insbesondere gleich ausgebildete Kupplungsteile (4) unmittelbar miteinander oder mittelbar über einen weiteren Querverbinder (16) und/oder einen speziellen Zusatzquerverbinder (26) in Querfügerichtung (24) kuppelbar sind.

7. Mehrfachkupplung nach einem der Ansprüche 1 bis 6,
**dadurch gekennzeichnet, dass** dasdenQuerverbinder(16) bildende Kupplungsteil (4) als Fluid-Steckverbinderteile Muffenöffnungen (12) zum Einstecken von Steckerteilen (10) der beiden anderen Kupplungsteile (2, 6) aufweist.

8. Mehrfachkupplung nach Anspruch 7,
**dadurch gekennzeichnet, dass** die Steckerteile (10) des zweiten Kupplungsteils (2) und des dritten Kupplungsteils (6) als gesonderte Einsatzteile (28) ausgebildet sind, die in Aufnahmeöffnungen des jeweiligen Kupplungsteils (2, 6) insbesondere über Rastmittel (30) fixiert gehalten sind.

## Claims

1. A multiple coupling (1) for simultaneous connection or severing of a plurality of media lines, with two plate-like coupling parts (2, 4), which in each case have a plurality of line ducts (8) with a corresponding number of fluid plug-connector parts (10, 12) such that the plug-connector parts (10, 12) can be assembled by bringing together the coupling parts (2, 4) in pairs in a joining direction (14), **characterised in that** the one, first, coupling part (4) on its side located opposite the other, second, coupling part (2) can be coupled in corresponding manner via plug-connector parts (10, 12) to a further, third, coupling part (6), the first coupling part (4) additionally being formed as a transverse connector (16) with at least one transverse duct (18) in addition to the line ducts (8) extending transversely to the joining direction (14) and at least one additional connector part (20, 22) arranged in the outer edge region of the coupling part (4).

2. A multiple coupling according to Claim 1, **characterised in that** the transverse duct (18) is connected to at least one of the line ducts (8).

3. A multiple coupling according to Claim 1 or 2, **characterised in that** the transverse duct (18) extends independently of the line ducts (8) through the coupling part (4) forming the transverse connector (16).

4. A multiple coupling according to one of Claims 1 to 3, **characterised in that** the transverse duct (18) connects at least two additional connector parts (20, 22) together, which parts are arranged in particular in opposing outer edge regions of the coupling part (4).

5. A multiple coupling according to one of Claims 1 to 4, **characterised in that** the coupling part (4) forming the transverse connector (16) has an even number of additional connector parts (20, 22) which are arranged such and are formed in each case half as plugs (20) and half as bushings (22) that the transverse connector (16) can be coupled to at least one further similar or same type of transverse connector (16) in a transverse joining direction (24) at right-angles to the joining direction (14) by assembling.

6. A multiple coupling according to one of Claims 1 to 5, **characterised in that** two coupling parts (4) formed, in particular identically, as transverse connectors (16) can be coupled together directly or indirectly via a further transverse connector (16) and/or a special additional transverse connector (26) in the transverse joining direction (24).

7. A multiple coupling according to one of Claims 1 to 6, **characterised in that** the coupling part (4) forming the transverse connector (16) has as fluid plug-connector parts bushing openings (12) for inserting plug parts (10) of the other two coupling parts (2, 6).

8. A multiple coupling according to Claim 7, **characterised in that** the plug parts (10) of the second coupling part (2) and of the third coupling part (6) are formed as separate insert parts (28) which are held in fixed manner in receiving openings in the respective coupling part (2, 6), in particular via latch means (30).

## Revendications

1. Accouplement multiple (1) servant à relier ou à séparer de manière simultanée plusieurs conduites de fluide, comportant deux parties d'accouplement (2, 4) réalisées sous la forme de plaques, lesquelles présentent respectivement plusieurs canaux de conduite (8) dotés d'un nombre correspondant de parties de connecteur (10, 12) de fluides de telle manière que les parties de connecteur (10, 12) peuvent être emboîtées en rassemblant les parties d'accouplement (2, 4) par paire dans une direction d'assemblage (14),
**caractérisé en ce que** la première partie d'accouplement (4) peut être couplée à une autre troisième partie d'accouplement (6) sur son côté opposé à la deuxième partie d'accouplement (2) d'une manière correspondante par l'intermédiaire de parties de connecteur (10, 12), dans lequel la première partie d'accouplement (4) est réalisée en plus sous la forme d'un connecteur transversal (16) doté au moins d'un canal transversal (18) s'étendant en outre en direction des canaux de conduite (8) de manière transversale par rapport à la direction d'assemblage (14) et d'au moins une partie de connecteur supplémentaire (20, 22) disposée dans la zone de bord extérieure de la partie d'accouplement (4).

2. Accouplement multiple selon la revendication 1,
**caractérisé en ce que** le canal transversal (18) est relié à au moins un des canaux de conduite (8).

3. Accouplement multiple selon la revendication 1 ou 2,
**caractérisé en ce que** le canal transversal (18) s'étend de façon indépendante par rapport aux canaux de conduite (8) à travers la partie d'accouplement (4) formant le connecteur transversal (16).

4. Accouplement multiple selon l'une quelconque des revendications 1 à 3,
**caractérisé en ce que** le canal transversal (18) relie entre elles au moins deux parties de connecteur supplémentaires (20, 22), lesquelles sont disposées en particulier dans des zones de bord extérieures opposées de la partie d'accouplement (4).

5. Accouplement multiple selon l'une quelconque des revendications 1 à 4,
**caractérisé en ce que** la partie d'accouplement (4) formant le connecteur transversal (16) présente un nombre pair de parties de connecteur supplémentaires (20, 22), lesquelles sont disposées de telle manière et réalisées respectivement pour une moitié sous la forme d'une fiche (20) et pour l'autre moitié sous la forme d'un embout femelle (22) de telle manière que le connecteur transversal (16) peut être couplé par emboîtement à au moins un autre connecteur transversal (16) similaire ou de même type dans une direction d'assemblage transversale (24) perpendiculaire par rapport à la direction d'assemblage (14).

6. Accouplement multiple selon l'une quelconque des revendications 1 à 5,
**caractérisé en ce que** deux des parties d'accouplement (4) réalisées notamment de manière identique sous la forme d'un connecteur transversal (16) peuvent être couplées directement entre elles ou indirectement par l'intermédiaire d'un autre connecteur transversal (16) et/ou d'un connecteur transversal supplémentaire (26) spécifique dans la direction d'assemblage transversale (24).

7. Accouplement multiple selon l'une quelconque des revendications 1 à 6,
**caractérisé en ce que** la partie d'accouplement (4) formant le connecteur transversal (16) présente en tant que parties de connecteur de fluides des ouvertures d'embouts femelles (12) servant à enficher des fiches de connexion (10) des deux autres parties d'accouplement (2, 6).

8. Accouplement multiple selon la revendication 7,
**caractérisé en ce que** les fiches de connexion (10) de la deuxième partie d'accouplement (2) et de la troisième partie d'accouplement (6) sont réalisées sous la forme de parties d'insertion (28) séparées, lesquelles sont maintenues de manière fixe dans des ouvertures de logement de la partie d'accouplement (2, 6) respective en particulier par l'intermédiaire de moyens d'enclenchement (30).
